# DEMANDE DE BREVET EUROPEEN

(11) **EP 2 198 693 A1**
(43) Date de publication de la demande: **23.06.2010**
(21) Numéro de dépôt: 09178708.5
(22) Date de dépôt: 10.12.2009
(51) Int. Cl.: A01G 9/02, A01G 27/00

(54) **Cassette florale isolante pour la réalisation de cloisons et d'habillages extérieurs et intérieurs d'immeubles**

(30) Priorité: 16.12.2008 FR 0858637
(71) Demandeur: Kakko-Chiloff, Anne, 45750 Saint-Pryve Saint-Mesmin (FR); Goncalves, Norbert, 45100 Orleans (FR); Francois, Jean-Luc, 45590 Saint-Cyr-en-Val (FR); Uzzan, Charles, 78000 Versailles (FR)
(72) Inventeur: Kakko-Chiloff, Anne, 45750 Saint-Pryve Saint-Mesmin (FR); Goncalves, Norbert, 45100 Orleans (FR); Francois, Jean-Luc, 45590 Saint-Cyr-en-Val (FR); Uzzan, Charles, 78000 Versailles (FR)
(74) Mandataire: Thinat, Michel

(57) **Abrégé**

La présente invention concerne une cassette florale isolante pour la réalisation de cloisons et d'habillages extérieurs et intérieurs d'immeubles.

La cassette comprend un bac (1) ayant une face (103) servant à la fixation du bac et une face (104) destinée à laisser apparaître des plantes, ainsi que des moyens (3) permettant de retenir l'humidité nécessaire à la vie des plantes avec une répartition au moins approximativement homogène sur toute la hauteur de la cassette.

## Description

La présente invention concerne une cassette florale isolante pour la réalisation de cloisons et d'habillages extérieurs et intérieurs d'immeubles.

La cassette comprend un bac pour l'implantation de plantes, ce bac ayant une face servant à la fixation du bac sur un support et une face destinée à laisser apparaître les plantes.

Il existe de nombreux dispositifs végétalisés destinées à l'habillage de parois d'immeuble telles des façades d'immeubles ou des murs intérieurs, tout en essayant d'apporter une isolation acoustique et thermique satisfaisant aux recommandations du développement durable.

Mais souvent, ces dispositifs ont le défaut de ne pas retenir l'humidité d'une façon uniforme dans le sens de la hauteur, à cause du ruissellement naturel de l'eau d'arrosage. L'arrosage doit alors être programmé par des périodes courtes à grande fréquence de façon à apporter une humidité suffisante dans les parties hautes. Il en résulte par la suite un excès d'humidité dans les parties basses, avec écoulement d'eau chargée de NPK (nitrate, phosphore, potasse).

Cette eau est polluante, difficile à collecter et à évacuer ; et elle est dégradante pour les murs supportant ces habillages.

Le but de l'invention est de remédier aux inconvénients exposés ci avant.

Le but de l'invention est atteint avec une cassette florale isolante pour la réalisation de cloisons et d'habillages extérieurs et intérieurs d'immeubles, comprenant un bac ayant une face servant à la fixation du bac et une face destinée à laisser apparaître des plantes.

Selon l'invention, la cassette comprend des moyens permettant de retenir l'humidité nécessaire à la vie des plantes avec une répartition au moins approximativement homogène sur toute la hauteur de la cassette.

Les moyens que la présente invention propose d'employer sont choisis de manière à
apporter une inertie à l'humidité en la retenant, de façon à espacer les périodes d'arrosage,
éviter le ruissellement de l'eau d'arrosage ou à le réduire à un minimum strictement contrôlé,
collecter l'éventuel ruissellement et le conduire à une bâche d'un réservoir de l'eau d'arrosage, et
supprimer tout épandage, extérieur à l'habillage, d'une eau polluante ou son rejet, au cas où on arriverait à la collecter, à l'égout.

A ces fins, la présente invention concerne également les caractéristiques ci-après, considérées isolément ou selon toute combinaison techniquement possible :
- le bac a une face supérieure et une face inférieure, il comprend respectivement sur la face supérieure et sur la face inférieure des moyens de raccordement permettant de relier hydrauliquement et électriquement deux cassettes superposées l'une à l'autre ;
- le bac comprend au moins une cloison de séparation disposée horizontalement en position d'utilisation du bac pour diviser le bac en au moins deux compartiments ;
- la cassette comprend des moyens permettant une distribution d'eau en faible quantité ;
- le bac comprend un serpentin d'irrigation pourvu de goutteurs ou de moyens d'aspersion orientés vers la face destinée à laisser apparaître les plantes ;
- la cassette comprend des moyens permettant de recevoir de l'eau d'arrosage et de la mettre à disposition pour le bac même et pour le bac d'une cassette éventuellement superposée ;
- la cassette comprend un connecteur et un câble permettant de transmettre, à la cassette même et pour une cassette éventuellement superposée, l'alimentation électrique et les signaux nécessaires au fonctionnement ;
- la cassette comprend des moyens permettant de collecter de l'eau d'arrosage excédante du bac même et de l'éconduire vers une cassette inférieure éventuelle ou un moyen de collecte disposé en-dessous de la cassette ;
- la cassette comprend au moins un détecteur d'humidité ;
- la cassette comprend une électrovanne, un régulateur de pression et une carte électronique de commande ;
- la cassette comprend des coussins contenant une matière agraire et un feutre destiné à l'implantation de plantes ;
- la cassette comprend des moyens de fixation pour la fixation du bac ainsi que pour la fixation, sur le bac, d'une grille de pressage destinée à fermer la cassette et retenir les plantes ;
- la cassette comprend un feutre, par exemple sous la forme d'une nappe en feutrine, servant à la plantation des plantes.

Le but de l'invention est également atteint avec une cloison ou un mur avec un habillage, l'habillage comprenant une ou plusieurs cassettes telles que décrites ci avant.

Et le but de l'invention et aussi atteint avec une cloison comprenant au moins deux cassettes telles que décrites ci avant montées dos à dos.

Une cloison formée par des cassettes montées dos à dos peut être réalisée avec ou sans paroi intermédiaire.

D'autres caractéristiques et avantages de la présente invention ressortiront de la description ci-après d'un mode de réalisation de l'invention. La description en est faite en référence aux dessins annexés dont :
les figures 1 et 2 représentent, respectivement en une vue de face et en une vue de côté, un bac d'une cassette selon l'invention, le bac étant formé de manière que des cassettes de même conception puissent être superposables et aussi juxtaposables en largeur, de façon à pouvoir couvrir la surface entière à habiller,
la figure 3 représente en détails des moyens pour une alimentation en eau d'arrosage d'une cassette selon l'invention,
la figure 4 représente en détails des moyens pour une collecte et une évacuation d'excédants occasionnels d'eau d'arrosage,
la figure 5 représente en détails la conception du bord inférieur d'un bac d'une cassette selon l'invention,
la figure 6 représente des moyens, autres que ceux de la figure 3, pour l'alimentation en eau d'arrosage d'une cassette selon l'invention, et
la figure 7 représente, sous la forme d'un schéma électrique, un moyen pour contrôler l'arrivée de l'eau d'arrosage à chaque cassette.

L'utilisation et la disposition de cassettes selon la présente invention étant largement déterminées par les caractéristiques du bac de chacune des cassettes, la description ci-après d'un mode de réalisation de la présente invention est simplifiée en se référant principalement au bac. Toutefois, cette simplification ne doit aucunement conduire à une interprétation limitative de la description.

En effet, pour ne citer qu'un exemple parmi d'autres exemples possibles, le bac est présenté avec une forme parallélépipédique, alors que d'autres formes, par exemple une forme trapézoïdale et une forme incurvée, sont également concevables sans sortir du principe de la présente invention.

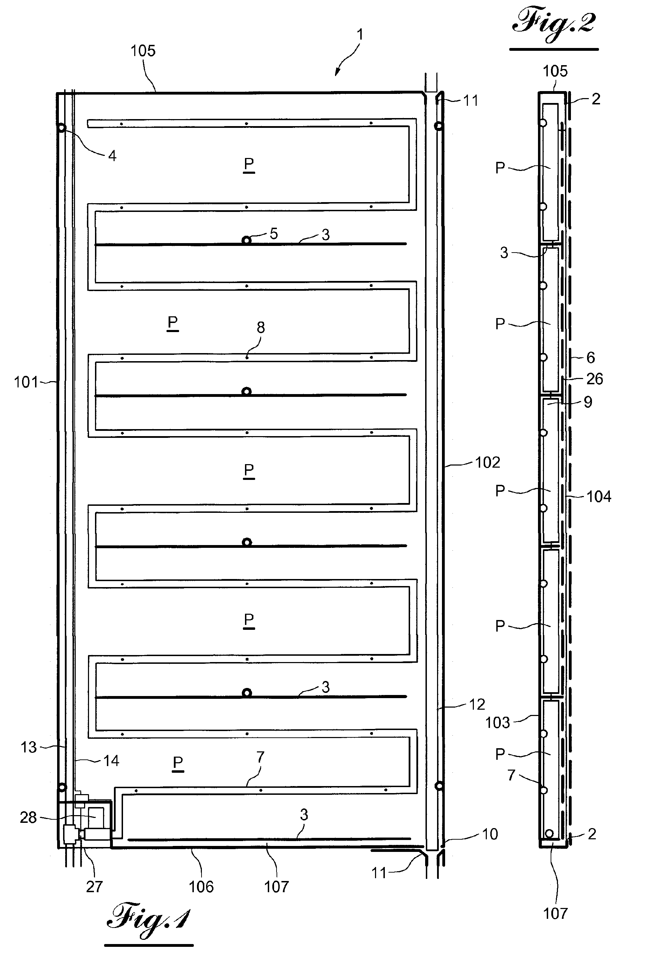

Selon le mode de réalisation choisi pour l'explication de l'invention, un bac 1 a la forme d'un parallélépipède rectangle avec des faces latérales 101, 102, une face 103 formant un fond du bac et servant à la fixation du bac dos à dos sur un autre bac, sur un support tel une cloison intérieure à habiller, sur une structure porteuse pour former une cloison intérieure ou sur une paroi d'immeuble à habiller, une face avant 104 destinée à laisser apparaître les plantes, ainsi qu'une face supérieure 105 et une face inférieure 106. Un tel bac peut avoir des dimensions telles que, par exemple, une hauteur de 2 m, une largeur de 1 m et une profondeur de 0,06 m, il est donc destiné à être disposé verticalement comme représenté sur la figure 1.

Le bac est ouvert sur sa face avant ou extérieure 104 mais possède des retours 2 sur les faces supérieure 105 et inférieure 106 dans le but de rigidifier le bac. A la partie inférieure du bac, le retour 2 sert en même temps à délimiter entre la face inférieure 106 et la cloison inférieure 3, un espace 107 formant un collecteur pour l'eau et pour faire écouler tout ruissellement susceptible de se produire.

Le bac est pourvu de cloisons de séparation 3 divisant le bac en un certain nombre d'alvéoles de plantation P. Les cloisons 3 sont disposées horizontalement en position d'utilisation du bac, ou avec une légère pente d'écoulement vers un côté du bac, et sont fixées, par exemple soudées, sur le fond 103. Les cloisons 3 sont pourvues d'un rebord 301 et ne se prolongent pas nécessairement jusqu'aux faces latérales 101, 102 du bac. En effet, selon l'exemple représenté dans les dessins, un passage est laissé à des tuyaux 12 et 13, et à un câble électrique 14. De plus, les passages latéraux facilitent le ruissellement d'un excédant d'eau d'arrosage ou de pluie, si celui-ci venait à se produire.

Selon l'exemple représenté dans les dessins, le bac est divisé ou cloisonné en cinq alvéoles P et le collecteur 107 située en-dessous de l'alvéole du bas. Cette division ou compartimentation a pour but de retenir, par quantités réduites et égales, l'humidité dans le sens vertical, ainsi que d'empêcher le glissement vers le bas des plantations.

Ce fractionnement par les cloisons 3 permet notamment, grâce à la répartition des charges, l'utilisation de substances lourdes telles que le terreau ou la tourbe, dont l'intérêt est indéniable, d'une part, pour la diffusion homogène de l'humidité et par conséquent de la nourriture apportée aux plantes et d'autre part, pour la conservation dans le temps de cette humidité.

Des tubes 4, à trous lisses avec passages correspondants dans le fond du bac, sont soudés à l'intérieur des parois latérales 101, 102 pour la fixation du bac ainsi qu'une grille de pressage 6. Des tubes 5, à trous taraudés, sont soudés aux cloisons 3 et servent à fixer, en son centre, la grille de pressage 6, qui devra résister dans le temps, à la poussée des racines.

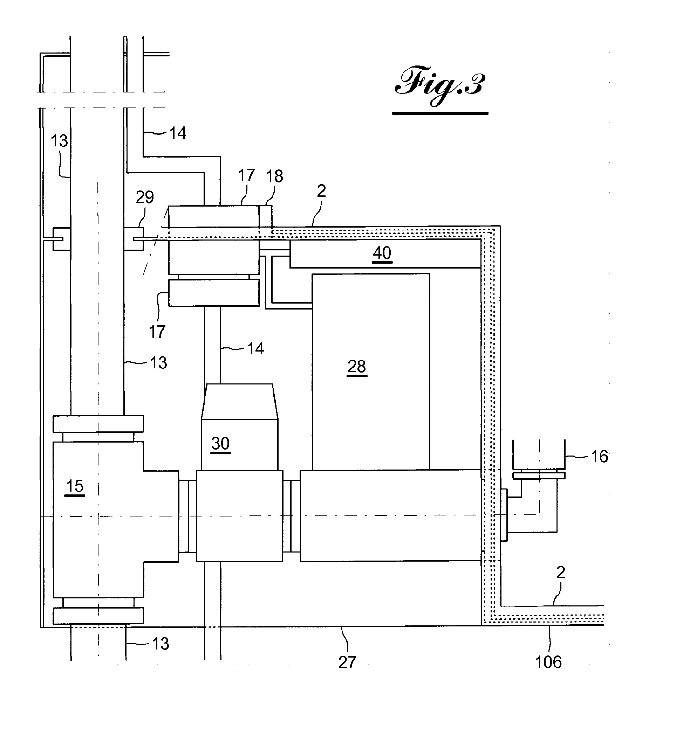

Un évidement 27 est ménagé, par exemple comme représenté sur les figures 1 et 3, au coin inférieur gauche, pour recevoir un té de raccordement 15, une électrovanne 28, un régulateur de pression 30, une carte électronique 40 et un connecteur 17. Il est à noter que le régulateur de pression 30, l'électrovanne 28 et la carte électronique 40 peuvent être installés dans une armoire générale extérieure. Dans ce cas, la liaison entre le té de raccordement 15 et le tube de raccordement 16 sera assurée par un tuyau de raccordement non représenté sur le dessin.

Chaque bac 1 est ainsi autonome et peut être démonté pour réparation ou réimplantation en atelier, sans perturber le reste de l'habillage. Il suffira pour cela de remplacer les tuyaux 12 et 13 et de mettre une rallonge électrique à la place du câble 14.

L'électrovanne 28, lorsqu'elle est activée, met sous pression un tube de raccordement 16 prolongé par un serpentin d'arrosage 7 qui chemine entre les cloisons 3 et qui est équipé de goutteurs 8 bien connus des horticulteurs.

Dans chaque compartiment (ou alvéole) constitué(e) par les cloisons de séparation 3 est logé un coussin 9.

Les coussins 9 sont réalisés dans un tissu perméable, utilisé par les horticulteurs pour les cultures hors sol et remplis par une substance agraire (terreau par exemple) pour retenir l'humidité et lui conférer une inertie suffisante, afin d'espacer les périodes d'arrosage et d'éviter les ruissellements.

Les coussins 9 s'appuient, dans le sens horizontal, sur le serpentin 7, face aux goutteurs ou moyens d'aspersion 8.

L'ensemble est recouvert par un feutre 26 d'environ 1 cm d'épaisseur servant à la plantation des plantes, le tout étant pressé par la grille métallique 6 contre le fond du bac.

Au cas où un ruissellement se produirait, il s'écoulerait sur les côtés des cloisons 3 qui mettent ainsi à l'abri les coussins inférieurs, puis il serait collecté dans la partie inférieure 107 du bac, limité par le retour 2, évacué par un trou 10 formé dans la face inférieure 106 du bac, collecté par un entonnoir 11 formé dans la face supérieure 105 d'un bac 1 placé en-dessous du premier bac et conduit par les tuyaux 12 vers une bâche d'un réservoir d'eau d'arrosage 20.

L'étanchéité du passage du tuyau 13 dans la face inférieure du bac est assurée par un passe-câble 29.

Le ruissellement éventuel, de toute façon minime, ne perturbera pas le niveau régulé et maintenu constant par une vanne à flotteur 21 du réservoir 20.

L'eau d'arrosage est alimentée par une pression extérieure, à travers un doseur automatique à by-pass 19.

Une pompe motorisée 22 met sous pression un circuit 23, limité par deux régulateurs de pression 24 et 25.

Le régulateur 24 maintient une pression adéquate dans le tuyau 13, à partir duquel sont dérivés les électrovannes 28 et/ou les serpentins 7.

Le régulateur 25 permet le retour en by-pass, de façon à continuer une circulation d'eau dans la pompe pendant les périodes de non arrosage.

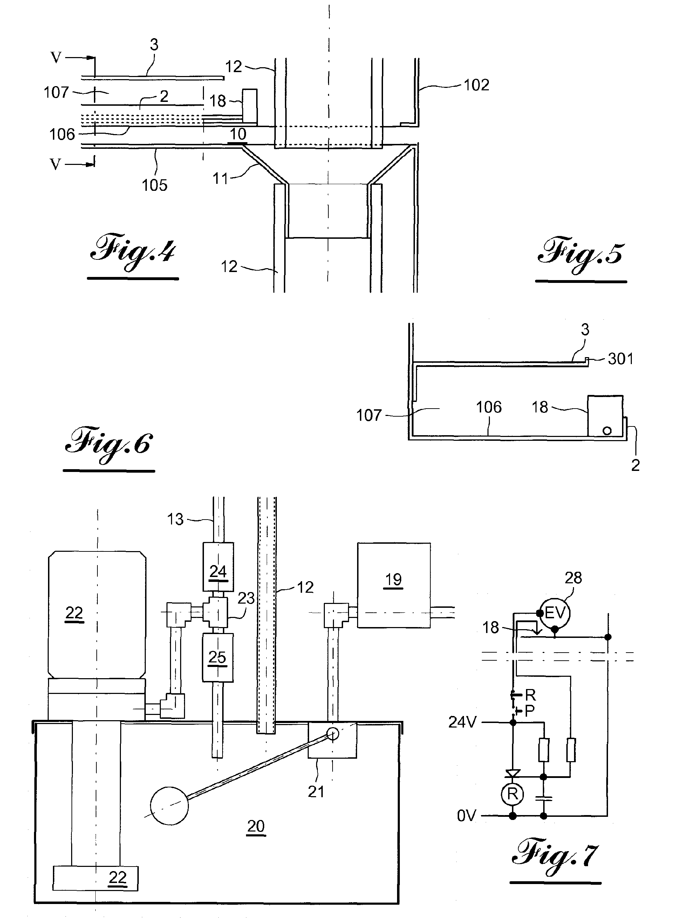

L'électrovanne 28 est pilotée par un programmateur classique d'arrosage au moyen d'un contact « P » (voir figure 7) et son fonctionnement est interdit par le contact « N/F » du relais « R » d'un détecteur d'humidité 18 (voir figures 3, 4, 5 et 7).

Ainsi, si un ruissellement est détecté dans l'une de plusieurs cassettes superposées, l'arrosage ne pourra reprendre, pour la cassette en question, que lorsque ce ruissellement aura disparu et ceci sans perturber l'arrosage des autres cassettes.

Les signaux électriques sont acheminés par le câble 14, les connecteurs 17 et par une liaison de masse entre les cassettes, assurée par la tuyauterie ou tout autre moyen de liaison.

L'alimentation électrique, pour des raisons de sécurité, est en basse tension, par exemple en 24 volts continu (compatible avec les circuits électroniques classiques) et ne conduit que des courants faibles.

La pression dans le tuyau 13 est réglée à une valeur adéquate, par le régulateur de pression 24 pour un bon fonctionnement des goutteurs autorégulés 8.

On notera que dans ce type d'application, le régulateur de pression 30 fait double-emploi avec le régulateur 24 et il est donc remplacé par un tuyau de liaison entre le té de raccordement 15 et l'électrovanne 28.

Selon une variante du mode de réalisation décrit jusqu'ici, chaque cassette pourra être équipée d'un régulateur de pression 30, ce qui permettra de raccorder le tuyau de distribution 13 directement à la pression extérieure, par exemple au réseau de distribution d'eau, après le by-pass 19.

## Revendications

1. Cassette florale isolante pour la réalisation de cloisons et d'habillages extérieurs et intérieurs d'immeubles, comprenant un bac (1) ayant une face (103) servant à la fixation du bac et une face (104) destinée à laisser apparaître des plantes,
**caractérisée en ce qu'**il comprend des moyens (3) permettant de retenir l'humidité nécessaire à la vie des plantes avec une répartition au moins approximativement homogène sur toute la hauteur de la cassette.

2. Cassette selon la revendication 1, le bac (1) ayant une face supérieure (105) et une face inférieure (106), **caractérisée en ce que** le bac comprend respectivement sur la face supérieure (105) et sur la face inférieure (106) des moyens de raccordement (10 à 15 et 17) permettant de relier hydrauliquement et électriquement deux cassettes superposées l'une à l'autre.

3. Cassette selon la revendication 1 ou 2, **caractérisée en ce que** le bac (1) comprend au moins une cloison de séparation (3) disposée horizontalement en position d'utilisation du bac (1) pour diviser le bac en au moins deux compartiments (P).

4. Cassette selon l'une quelconque des revendications 1 à 3, **caractérisée en ce qu'**elle comprend des moyens (7) permettant une distribution d'eau en faible quantité.

5. Cassette selon la revendication 4, **caractérisée en ce que** le bac (1) comprend un serpentin d'irrigation (7) pourvu de goutteurs (8) orientés vers la face (104) destinée à laisser apparaître les plantes.

6. Cassette selon l'une quelconque des revendications 1 à 5, **caractérisée en ce qu'**elle comprend des moyens (13, 15) permettant de recevoir de l'eau et de la mettre à disposition pour le bac même et pour le bac d'une cassette éventuellement superposée.

7. Cassette selon l'une quelconque des revendications 1 à 6, **caractérisée en ce qu'**elle comprend un connecteur (17) et un câble (14) permettant de transmettre, à la cassette même et pour une cassette éventuellement superposée, l'alimentation électrique et les signaux nécessaires au fonctionnement.

8. Cassette selon l'une quelconque des revendications 1 à 7, **caractérisée en ce qu'**elle comprend des moyens (2, 10 - 12) permettant de collecter de l'eau d'arrosage excédante du bac même et de la conduire vers une cassette inférieure éventuelle ou un moyen de collecte (20) disposé en-dessous de la cassette.

9. Cassette selon l'une quelconque des revendications 1 à 8, **caractérisée en ce qu'**elle comprend au moins un détecteur d'humidité (18).

10. Cassette selon l'une quelconque des revendications 1 à 9, **caractérisée en ce qu'**elle comprend une électrovanne (28), un régulateur de pression (30) et une carte électronique de commande (40).

11. Cassette selon l'une quelconque des revendications 1 à 10, **caractérisée en ce qu'**elle comprend des coussins (9) contenant une matière agraire et un feutre (26) destiné à l'implantation de plantes.

12. Cassette selon l'une quelconque des revendications 1 à 11, **caractérisée en ce qu'**elle comprend des moyens de fixation (4, 5) pour la fixation du bac (1) ainsi que pour la fixation, sur le bac (1), d'une grille de pressage (6) destinée à fermer la cassette et retenir les plantes.

13. Cloison ou mur avec un habillage, **caractérisé en ce que** l'habillage comprend une ou plusieurs cassettes selon l'une quelconque des revendications 1 à 12.

14. Cloison **caractérisée en ce qu'**elle comprend des cassettes selon l'une quelconque des revendications 1 à 12, montées dos à dos.
